# EUROPEAN PATENT SPECIFICATION

(11) **EP 3 830 156 B1**
(45) Date of publication and mention of the grant of the patent: **27.11.2024**
(21) Application number: 18928229.6
(22) Date of filing: 30.07.2018
(51) Int. Cl.: C08G 18/22, C08G 59/22, C08G 18/00, C08G 18/02, C08G 18/16, C08G 18/20, C08G 18/76, C08G 59/40

(54) **CURABLE RESIN COMPOSITION**
HÄRTBARE HARZZUSAMMENSETZUNG
COMPOSITION DE RÉSINE DURCISSABLE

(43) Date of publication of application: 09.06.2021
(73) Proprietor: Dow Global Technologies LLC, Midland, MI 48674 (US)
(72) Inventor: CHEN, Yu, Shanghai 201606 (CN); FENG, Yanli, Shanghai 201606 (CN); GUO, Kunpeng, Shanghai 201606 (CN); ZHENG, Chen, Shanghai 201606 (CN); FENG, Shaoguang, Shanghai 201206 (CN); CHEN, Huan, Shanghai 201606 (CN); WAN, Xiaohuan, Shanghai 201615 (CN); TANG, Qiqi, Shanghai 201606 (CN)
(74) Representative: Beck Greener LLP
(86) International application number: PCT/CN2018/097725
(87) International publication number: WO 2020/024091

(56) References cited:
- WO-A1-2014/076024
- CN-A- 102 666 633
- US-A- 4 658 007
- US-A- 4 658 007
- US-A- 5 126 406

## Description

### FIELD

The present invention relates to an oxazolidone structure-containing curable polymer resin composition; and more specifically, the present invention relates to an in situ curable polyisocyanurate-based polyoxazolidone polymer resin composition that has a high ratio of oxazolidone/isocyanurate, as set out in the appended claims.

### BACKGROUND

It is well known to react a polyepoxide with a polyisocyanate, in the presence of a catalyst, to form an oxazolidone-containing polymer or polyoxazolidone polymer. The oxazolidone-containing polymer is also referred to, by those skilled in the art, as a "prepolymer" or "polymer precursor" because after the oxazolidone-containing polymer or polyoxazolidone polymer precursor is produced, the precursor can be subsequently used to prepare a final product such as polyurethane films, elastomers, structural foams, rigid foams, flexible foams and the like when the precursor is an isocyanate-terminated prepolymer. Or, the precursor can be subsequently used to prepare a final product such as epoxy coating, resins, adhesives and the like when the precursor is an epoxy-terminated oxazolidone pre-polymer. Any of the conventional techniques for preparing polyurethanes and/or epoxy resins are used with the known precursors. Thus, processes of the prior art include, as a first step, producing a pre-polymer by reacting a polyepoxide and polyisocyanate in the presence of a catalyst to form a polyoxazolidone pre-polymer followed by curing the pre-polymer to form a final oxazolidone structure-containing curable polymer resin composition product for subsequent use in an application. The use of such known pre-polymers can add complexity and cost to the known processes.

Therefore, it would be an advantage to eliminate the use of a pre-polymer in the production of an oxazolidone structure-containing curable polymer resin composition. In addition, it would be beneficial to provide an oxazolidone structure-containing curable polymer resin composition that does not require the use of a pre-polymer and still maintains excellent mechanical properties including tensile strength, flex and impact resistance as well as high glass transition temperature (Tg). Furthermore, it would be an advancement in the art to provide a formulation that includes a catalyst system that can catalyze the reaction with a fast curation rate and higher Tg, while maintaining a high oxazolidone content and a long shelf life at low temperatures.

US 5,126,406 discloses a thermosetting epoxy resin composition comprising (a) a polyisocyanate compound, (b) a polyepoxide compound, (c) a radical polymerizable compound selected from the group consisting of a vinyl aromatic monomer and a (meth)acrylate represented by CH₂=CR₁-CO-OR₂ wherein Ri represents a hydrogen atom o r a methyl group, R₂ represents an aliphatic group having 4 to 18 carbon atoms, an alicyclic group or an aromatic group, (d) a specific oxazolidone-forming catalyst, and (e) a radical polymerization initiator; the polyisocyanate compound (a) and polyepoxide compound (b) being present in a functional group equivalent ratio of isocyanate group:epoxy group within the range of 1:2 t o 2:1 and the radical polymerizable compound (c) being present in an amount of about 1 to 100 parts by weight based on the total amount of the polyisocyanate compound (a) and the polyepoxide compound. The present invention also provides a cured article obtained from the thermosetting resin composition of the present invention.

U.S. Patent No. 4,658,007 discloses a process for preparing polyisocyanurate-based polyoxazolidone polymers by reacting a polyepoxide and a polyisocyanate in the presence of a catalytic amount of organoantimony iodide catalyst. While the above patent discloses a process, the patent reference is silent on the physical or mechanical performance or the shelf stability of the reacted compositions. The above patent is not directed to producing reactive composition with (1) a final oxazolidone/isocyanurate ratio content of 0.8 or more, (2) an improved shelf stability, and/or (3) a glass transition temperature (Tg) (following curing of the compositions) of greater than 190 °C. These performance properties are all important properties for providing a composition that can be successfully used in an application process.

### SUMMARY

The invention is set out in the appended set of claims.

One embodiment of the present invention is directed to a process for preparing a curable resin composition comprising admixing (a) at least one polyepoxide compound; and (b) at least one polyisocyanate compound in the presence of (c) a catalyst system; wherein the catalyst system comprises at least one organoantimony catalyst, at least one nitrogen-containing catalyst, and at least one iodide catalyst added in a sequence in the order of first the organoantimony catalyst, then the nitrogen-containing catalyst, and last the iodide catalyst; wherein the organoantimony catalyst is triphenyl antimony and wherein the iodide catalyst is iodine; wherein the ratio of the at least one polyepoxide compound to the at least one polyisocyanate compound is from 1 to 1.5; and wherein the composition has an oxazolidone/isocyanurate ratio of greater than 0.8. The process can be used to prepare an in situ curable polymer resin formulation or composition that is free of solvent; and that surprisingly achieves a high oxazolidone/isocyanurate ratio content (greater than 0.8) simultaneously during the curation process.

Therefore, one objective of the present invention is to provide a polyisocyanurate-based polyoxazolidone polymer that: (1) is made without using a pre-polymer; (2) has a high ratio of oxazolidone/isocyanurate (> 0.8); and (3) is in situ curable in the absence of a solvent, i.e., there is no solvent introduced or needed in the formulation to dissolve the catalyst. Solvents tend to generate bubbles during the cure process of the formulation. Therefore, there is an advantage in using a solventless formulation. There is also a cost advantage for using an in situ cure process of the present invention which does not require a pre-polymer.

Another embodiment of the present invention includes a process for preparing a cured thermoset resin polymer product made from the above polyisocyanurate-based polyoxazolidone polymer which; after curing the polymer, the in-situ cured polymer resin exhibits excellent properties such as a high glass transition temperature (Tg) (e.g., greater than (>) 190 °C); a high impact strength (e.g., > 30 kJ/m2); a high tensile strength (e.g., > 80 MPa); a high flex strength (e.g., > 130 MPa); and an increased pot stability (e.g., > 2 hours (hr) at RT (room temperature, approximately (~) 25 °C)). These performance properties are comparable to, or exceed, conventional products made from conventional oxazolidone-containing pre-polymers.

The beneficial results obtained by the in-situ cure oxazolidone chemistry of the present invention disclosed above are achieved by using the proper polymer having a high oxazolidone content in the formulation and by selecting the proper reactants including the polyepoxide compound, polyisocyanate compound, catalyst system; and the proper dosages of the reactants, proper catalyst ratios, and proper cure temperatures.

Also disclosed herein but not part of the claimed invention, another objective is to provide a catalyst system that can catalyze the reactions with a fast curation rate and a high Tg, while maintaining the high oxazolidone content and a long shelf life of a formulation, which are important for a successful application process.

The catalyst system with the desired properties may include, for example, a combination of at least one primary catalyst (e.g., Ph₃Sb plus I₂) and at least one secondary catalyst (e.g., DBU or EMI). In addition, the present invention includes the discovery of a beneficial narrow concentration range of the secondary catalyst. It is known that the secondary catalyst can also catalyze side reaction for isocyanurate. Thus, it has been discovered that the maximum loading for the secondary catalyst can be up to 0.04 wt % so as to keep the oxazolidone content of the formulation at a high level.

It was found that the sequence of the catalyst loading affects the results of the catalyst activity. For example, the following sequence: Ph₃Sb→DBU→I₂, demonstrates all of the beneficial properties such as a high Tg, a high oxazolidone content, and a fast reactivity while maintaining the formulation stability at a lower temperature (e.g., 25 °C). It is hypothesized that when Ph₃Sb, a Lewis acid, when combined first with DBU, can react with DBU to form catalyst-blocking, whereas when Ph₃Sb is paired up with I₂ first, the resulting Ph₃SbI₂ once formed can no longer react with DBU.

### DETAILED DESCRIPTION

In a broad embodiment, the present invention includes a neat, solventless (i.e., free of solvent) curable thermoset polymer resin composition which is adapted for in situ curing. For example, the resin composition includes: (a) at least one epoxy resin compound such as D.E.R. 383 and 127E; (b) at least one isocyanate compound such as MDI or pMDI; and (c) a catalyst system including a combination of at least a first catalyst and a second catalyst; wherein the first catalyst includes (ci) at least one antimony catalyst that is Ph₃Sb; and wherein the second catalyst includes (cii) an iodine (I₂) catalyst.

The epoxy resin component (a) useful for preparing the thermoset resin polymer composition of the present invention may include for example a single epoxy resin or a mixture of two or more different epoxy resins. The epoxy resin component (a) may be solid or liquid at room temperature (about 25 °C). If a solid, the polyepoxide may be heat softenable at an elevated temperature of between 50 °C. and 150° C. Mixtures of solid and liquid (at room temperature) polyepoxides can be used. The polyepoxide or a mixture thereof suitably has an average epoxide equivalent weight (EEW) of from 150 to 800, from 170 to 400 and/or from 170 to 250. Individual polyepoxides contained in a mixture may have EEWs outside of that range. A wide variety of polyepoxide compounds, such as cycloaliphatic epoxides, epoxidized novolac resins, epoxidized bisphenol A or bisphenol F resins can be used, but may be preferred on the basis of cost and availability are liquid or solid glycidyl ethers of a bisphenol such as bisphenol A or bisphenol F. Halogenated, particularly brominated, polyepoxides can be used to impart flame retardant properties if desired. Polyepoxides of particular interest are polyglycidyl ethers of bisphenol A or bisphenol F having an EEW of 150 to 800. Blends of one or more polyglycidyl ethers of bisphenol A or bisphenol F. The epoxy resin may be halogenated (in particular, brominated) if desired in order to impart flame resistance.

Suitable polyepoxides useful in the present invention can include commercially available polyepoxides. Among these polyepoxides are liquid polyepoxides such as D.E.R. 317, D.E.R. 330, D.E.R. 331, D.E.R. 332, D.E.R. 336, D.E.R. 337 and D.E.R. 383; solid polyepoxides such as D.E.R. 642U, D.E.R. 661, D.E.R. 662, D.E.R 663, D.E.R. 671, D.E.R. 672U, D.E.R. 692, D.E.R. 6155, D.E.R. 666E, D.E.R. 667-20, D.E.R. 667E, D.E.R. 668-20, D.E.R. 669-60, D.E.R. 669E and D.E.R 6225; brominated polyepoxides such as D.E.R. 542, D.E.R. 560 and D.E.R. 593; epoxy novolac resins such as D.E.N. 425, D.E.N. 431, D.E.N 438; D.E.N. 439; and 127E; and mixtures thereof; all of which are available from Olin.

In an exemplary embodiment, the epoxy compounds useful for preparing the thermoset resin polymer composition can include, for example, brominated aromatic epoxy resins, non-brominated epoxy resins, bisphenol A epoxy resins, bisphenol F epoxy resins, biphenyl epoxy resins, naphthalene epoxy resins, divinylbenzene dioxide, and mixture thereof.

In general, the concentration of the epoxy resin component (a) used in the present invention may range generally from about 20 weight percent (wt %) to about 80 wt % in one embodiment, and from about 30 wt % to about 60 wt % in another embodiment, based on the total weight of all components in the composition.

The resin composition or formulation of the present invention includes at least one isocyanate component, as component (b), of the formulation, i.e., the isocyanate component useful in the present invention may include one or more isocyanate-containing components. For example, the resin composition may include for example a single polyisocyanate or a mixture of two or more different polyisocyanates.

In general, suitable polyisocyanate compounds useful in the present invention can include aromatic, aliphatic and cycloaliphatic polyisocyanates. For example, polyisocyanate compounds may include m-phenylene diisocyanate; 2,4-and /or 2,6-toluene diisocyanate (TDI); the various isomers of diphenylmethanediisocyanate (MDI); the so-called polymeric MDI products (pMDI); carbodiimide modified MDI products; hexamethylene-1,6-diisocyanate; tetramethylene-1,4-diisocyanate; cyclohexane-1,4-diisocyanate; hexahydrotoluene diisocyanate; hydrogenated MDI; naphthylene-1,5-diisocyanate; isophorone diisocyanate (IPDI) and mixtures thereof. Suitable examples of commercially available MDI or pMDI may include for example OP50 and PAPI27; and mixtures thereof.

The polyisocyanate component (b) can have an average functionality of isocyanate groups of, for example, from 2 to 2.7 in one embodiment, and from 2 to 2.3 in another embodiment.

Generally, the amount of polyisocyanate component (b) used in the resin formulation of the present invention can be generally for example from 20 wt % to 80 wt % in one embodiment, and from 40 wt % to 70 wt % in another embodiment, based on the total weight of all components in the formulation.

The catalyst system component (c) useful in the present invention includes a combination of (ci) a catalytic amount of at least one primary catalyst that is, an organoantimony iodide (Ph₃Sb and I₂); and (cii) a catalytic amount of at least one secondary catalyst for example 1,8-diazabicyclo[5.4.0]undec-7-ene (DBU) and/or 2-ethyl-4-methylimidazole (EMI) catalyst or 1- methylimidazole; or mixtures thereof.

The primary catalyst includes, a first catalyst and a second catalyst; wherein the first catalyst includes at least one antimony catalyst that is triphenyl antimony (Ph₃Sb) with iodine (I₂); and wherein the second catalyst includes (cii) a nitrogen-containing catalyst.

The secondary catalyst can include, for example, a third catalyst and optionally a fourth catalyst; wherein the third catalyst includes for example, DBU catalyst; and wherein the optional fourth catalyst may include EMI catalyst.

In addition, a variety of other known catalysts can be optionally added to the catalyst system component (c) of the present invention. For example, the optional catalyst useful in the present invention may include tertiary amines such as trimethylamine, triethylamine, N-methylmorpholine, N-ethylmorpholine, N,N-dimethylbenzylamine, N,N-dimethylethanolamine, N,N,N',N'-tetrsmethyl-1,4-butanediamine, N,N-dimethylpiperazine, bis(dimethylaminoethyl) ether and triethylenediamine; tertiaery phosphines such as trialkylphosphines and dialkylbenzylphosphines; chelates of various metals such as those which can be obtained from acetyl acetone, benzoylacetone, trifluoroacetyl acetone, ethyl acetoacetate and the like, with metals such as Be, Mg, Zn, Cd, Pd, Ti, Zr, Sn, As, Bi, Cr, Mo, Mn, Fe, Co and Ni; acidic metal salts of strong acids such as ferric chloride, stannic chloride; salts of organic acids with variety of metals, such as alkali metals, alkaline earth metals, Aal, Sn, Pb, Mn, Co, Ni and Cu; and mixtures thereof. In another embodiment, organometallic derivatives of tetravalent tin, trivalent and pentavalent As, Sb and Bi and metal carbonyls of iron and cobalt; and mixtures thereof, can also be used in the present invention. In still another embodiment, tertiary amine catalysts such as N,N,N-trimethyl-N-hydroxyethyl-bis(aminoethyl) ether, dimethyl 1-2(2-aminoethoxy) ethanol and the like; and mixtures thereof, can also be used in the present invention.

In the formulation of the present invention, the equivalent NCO and equivalent epoxy mole ratio: (mass of isocyanate* epoxy equivalent weight of epoxy resin) / (mass of epoxy resin * NCO equivalent weight of isocyanate) ranges from 1.0 to 2.0 in one embodiment and from 1.2 to 1.5 in another embodiment.

The total mass of Ph₃Sb and I₂ in the formulation of the present invention can be from 0.5 wt % to 2 wt % in one embodiment, from 1.0 wt % to 1.5 wt % in another embodiment, and from 1.0 wt % to 1.2 wt %. The mass ratio between Ph₃Sb and I₂ can range from 0.72 to 1.44.

When the DBU catalyst and/or the EMI catalyst is used as the secondary catalyst component, the secondary catalyst can be used in a beneficial narrow concentration range with a maximum loading value (e.g., up to 0.1 wt %). It is important to have a maximum loading for the secondary catalyst to keep the oxazolidone content of the formulation at a high level. For example, the range of the secondary catalyst can be less than or equal to 0.1 wt % in one embodiment; and from 0.04 wt % to 0.1 wt % in another embodiment. It is known that the secondary catalyst can catalyze side reaction for isocyanurate which can deleteriously affect the oxazolidone content of the formulation. Thus, the maximum loading for the secondary catalyst should be kept at the narrow range of from 0.04 wt % to 0.1 wt %.

The two chemicals are mixed sequentially, with either the polyepoxide component or with the polyisocyanate component, in solid form without a solvent.

According to the invention, the catalyst system includes a nitrogen-containing catalyst, such as DBU or EMI, and the adding sequence of the catalysts to the polyepoxide component is as follows: Ph₃Sb→nitrogen-containing catalyst e.g. DBU/EMI→I₂.

The advantage of using a low amount of secondary catalyst is that a high oxazolidone content of final product can be maintained by accelerating the reaction speed. The ratio of Ph₃Sb and I₂ is also important as Ph₃SbI₂ or Ph₃SbI₄ can catalyze the reaction much faster than Ph₃Sb alone. And, the novel catalyst loading sequence is likewise important because either Ph₃SbI₂ or Ph₃SbI₄ alone is insoluble in epoxy resin; however, the combination of Ph₃Sb and I₂ can be dissolved in epoxy resin below 60 °C. In addition, once I₂ is added to the epoxy resin, I₂ can react with Ph₃Sb and thereafter the secondary catalyst cannot form an acid:base pair with Ph₃Sb. Therefore, the sequence of adding the catalyst system to the epoxy resin is in the order of: first Ph₃Sb, then secondary catalyst, and last I₂. The above novel sequence of addition is preferred to achieve the benefit of long pot life and fast reaction.

A variety of other optional conventional components can be added to the polymer resin formulation of the present invention. Suitable optional compounds or additives useful for the resin composition are well known in the art and can include, for example, molecular sieve for moisture adsorption; mold releasing agents; surfactants; toughening agents, flow modifiers, adhesion promoters, diluents, stabilizers, plasticizers, catalyst de-activators, flame retardants, liquid nucleating agents, solid nucleating agents, Ostwald ripening retardation additives, and mixtures thereof.

Any suitable combination of the above optional additives and additive amounts, as well as the method of incorporating the optional additive(s) into the resin composition can be carried out. Typically, each of the above optional additives, if used in the resin composition, does not exceed 10 wt % based on total composition weight; and are advantageously used in the range of generally from 0 wt % to 10 wt %, preferably from 0.001 wt % to 10 wt %, more preferably from 0.01 wt % to 5 wt %, even more preferably from 0.1 wt % to 10 wt %, and most preferably from 0.1 wt % to 1 wt %.

In one broad embodiment, the process for making the reactive thermoset resin composition of the present invention includes admixing components (a)-(c) described above. Then one or more additional optional components may be added to the formulation as desired. Generally, the preparation of the resin composition includes mixing of the components at a temperature of from 25 °C to 60°C in one embodiment; and from 40 °C to 50 °C in another embodiment. The order of mixing of the ingredients is not critical and two or more compounds can be mixed together followed by addition of the remaining ingredients. The ingredients that make up the resin composition may be mixed together by any known mixing process and equipment. The conventional process and equipment to make the polymer resin composition may include for example a bench top mixer.

In a preferred embodiment, the process for preparing a polyoxazolidone product by reacting (a) at least one polyepoxide compound; and (b) at least one polyisocyanate compound in the presence of (c) a catalyst system. The process includes for example the sequential steps of: (I) allowing the polyepoxide compound to react for a predetermined time in presence of the catalyst system at a temperature of at least greater than or equal to 50 °C to form a polyepoxide reaction mixture; and (II) after step (I), adding the polyisocyanate compound to the polyepoxide reaction mixture of step (I) and allowing the polyisocyanate compound to react with the polyepoxide reaction mixture of step (I) for a predetermined time in the presence of the catalyst system at an temperature of less than 50 °C to form a polyoxazolidone material having an oxazolidone/isocyanurate ratio of greater than 0.8. Following the process steps above, a polymer resin composition and a cured product made from the resin composition having improved properties can be obtained as described herein.

In another embodiment, the reaction temperature of step (I) of the above process can be, for example, from 50 °C to 60 °C; and the reaction temperature of step (II) can be, for example, from 30 °C to 49 °C.

In still another embodiment, the process of the present invention can include, after step (II), the step of (III) degassing the polyoxazolidone material, for a predetermined amount of time under vacuum, any bubbles formed in the reaction.

The polymer resin composition of the present invention produced by the process of the present invention has several advantageous properties and benefits compared to conventional formulations. According to the invention, the resin has a desired high content of oxazolidone at an oxazolidone/isocyanurate ratio of > 0.8.. The oxazolidone/isocyanurate ratio of the composition is important because high oxazolidone provide better mechanical strength and high isocyanurate provides high glass transition temperature and flame-retardant properties.

Another beneficial property exhibited by the composition of the present invention can include a long shelf stability or pot life of the composition which can be > 2 hr below 60 °C in one embodiment, and from 2 hr to 48 hr in another embodiment. "Shelf stability" or "pot life", with reference to a resin composition, herein means the viscosity draft after mixing. Shelf stability or pot life" can be measured according to the time while viscosity of the formulation is below 2 Pa.s at a defined temperature (e.g. 20 °C). The long shelf life of the composition is advantageous at low temperatures including for example from -10 °C to 60 °C in one embodiment; and from 25 °C to 60 °C in another embodiment. A long pot life of the composition is beneficial because a long pot life provides a long window of operation time which, in turn, allows a material to be prepared prior to curing the material without requiring in-line mixing equipment.

Gel time is another advantageous property exhibited by the composition of the present invention. For example, the gel time of the composition can be from 180 seconds (s) to 400 s in one embodiment; and from 120 s to 300 s in another embodiment. A short gel time of the composition, as described above, can lead to high productivity and fast curing.

Generally, after the reactive resin composition is prepared as described above, the composition can be in situ cured at a temperature of from 80 °C to 210 °C in one embodiment; from 100 °C to 210 °C in another embodiment; and from 120 °C to 200 °C in still another embodiment.

The formulation of the present invention also includes a catalyst system that can catalyze the reaction with a fast curation rate. For example, the cure time of the composition in 120 °C can be from 100 s to 400 s in one embodiment; and from 200 s to 300 s in another embodiment. The cure time of the composition can determine the minimal heating time or processing time needed for sufficient curation.

The thermoset cured product made in accordance with the present invention advantageously has several advantageous properties and benefits compared to conventional polymer resins made from prepolymers. For example, the in situ cured polymer resin product produced from the resin composition of the present invention surprisingly and unexpectedly exhibits excellent properties including, for example, a glass transition temperature (Tg) of > 190 °C in one embodiment; a Tg of from > 190 °C to 230 °C in another embodiment; and a Tg of from 160 °C to 200 °C in still another embodiment. A proper Tg of the thermoset demonstrates the thermostability of the material and the Tg can be correlated to a maximum temperature for the thermoset to maintain its mechanical strength.

In addition, the impact resistance strength property of the thermoset product as measured and determined by the procedure described in ISO179 can be, for example, > 30 kJ/m² in one embodiment; and from > 30 kJ/m² to 40 kJ/m² in another embodiment. The impact resistance property of the thermoset can demonstrate the toughness of the material.

Also, the tensile strength property of the thermoset product as measured and determined by the procedure described in ISO527 can be can be, for example, > 80 MPa in one embodiment; and from > 80 MPa to 100 MPa in another embodiment. The tensile strength property of the thermoset can demonstrate the toughness of the material.

Another advantageous property of the thermoset product is its flex strength. The flex strength property of the thermoset product as measured and determined by the procedure described in ISO178 can be, for example, > 130 MPa in one embodiment, > 160 MPa in another embodiment, and from > 130 MPa to 150 MPa in still another embodiment. The flex strength property of the thermoset can also demonstrate the toughness of the material.

The thermoset product made in accordance with the present invention can be useful in a variety of applications including, for example, for composite applications; coating applications; and adhesive applications. In a preferred embodiment, the thermosets of the present invention may be used for composite applications.

### EXAMPLES

The following examples are presented to further illustrate the present invention in detail but are not to be construed as limiting the scope of the claims. Unless otherwise stated all parts and percentages are by weight.

Various raw materials used in the examples which follow are explained hereinbelow in Table I.

**Table I - Raw Materials**

| Component | Description | Supplier |
|---|---|---|
| D.E.R. 383 | epoxy resin | Olin Co. |
| OP50 | diphenylmethanediisocyanate (MDI); isocyanate | The Dow Chemical Company (Dow) |
| PAPI27 | polymeric MDI (pMDI); isocyanate | Dow |
| NS540 | pMDI | Dow |
| Ph₃Sb | triphenyl antimony; catalyst | T.C.I. |
| I₂ | Iodine; catalyst | SCRC |
| DBU | 1,8-diazabicyclo[5.4.0]undec-7-ene (DBU) | Ourchem Co. |
| 2E4MI | 2-ethyl-4-methyl imidazole (2E4MI) | Ourchem Co. |
| BDMA | N,N-dimethylbenzylamine (BDMA) | Ourchem Co. |

### Example 1-6 and Comparative Examples A-E

The compositions for testing described in Table II were prepared according to the general procedure described herein below; and the results of testing the formulations prepared according to the procedure are also found in Table II.

### General Procedure for Preparing Formulations

The compositions for testing described in Table II were prepared according to the following general procedure:
Step (1): Weigh Ph₃Sb and I₂, or other catalysts, according to the formulation and mix the catalysts in the epoxy resin. Then, heat the resultant mixture to 60 ° C and maintain the mixture at 60 °C for 1 hour. After an hour, allow the mixture to cool down to room temperature (about 25 °C).
Step (2): Add MDI or pMDI into the mixture of epoxy resin/catalysts while mixing the resultant mixture using a speed mixer at 1,000 revolutions per minute (RPM) for 1 minute.
Step (3): Use a vacuum oven to degas from mixture any bubbles that form in the mixture under a full vacuum for 30 minutes.
Step (4): Cast the material into a mold and then cure the material in an oven at a ramp from 120 °C to 200 °C in 1 hour and hold at 200 °C for an additional 2 hours.
Step (5): Thereafter, allow the cured material to cool down to room temperature; and then test the Tg of the cured material using a DSC middle point method (as described in ISO 11357, 10 °C/min). Also, measure the mechanical properties of the cured material with standard methods. For example, to measure the tensile strength and elongation of the cured material, the method described in ISO527 can be used; to measure the flex strength of the cured material, the method described in ISO178 can be used; and to measure the impact strength of the cured material, the method described in ISO179 can be used.
Step (6): Test the oxazolidone/isocyanurate ratio of the material using a FTIR equipped with diamond ATR accessory. The result can be acquired by dividing the peaks height of 1750 cm⁻¹ and 1700 cm⁻¹ (baseline 1780-1560 cm⁻¹) in the FTIR spectrum.
Step (7): Test the viscosity drift in G2 under either N₂ or compression air environment at 40 °C or 60 °C. The gel time can be measured on a hot plate open to air with 0.4 ml loading at 120 °C.

The results of testing the formulations prepared according to the above procedure are also found in Table II.

**Table II - Compositions and Test Results**

| | Inv. Ex. 1 | Inv. Ex. 2 | Inv. Ex. 3 | Inv. Ex. 4 | Inv. Ex. 5 | Inv. Ex. 6 | Comp. Ex. A (Control) | Comp. Ex. B (Control) | Comp. Ex. C (Control) | Comp. Ex. D (Control) | Comp. Ex. E (Control) |
|---|---|---|---|---|---|---|---|---|---|---|---|
| Component | | | | | | | | | | | |
| Epoxy Resin (DER 383), g | 52.17 | 39.69 | 41.83 | 52.17 | 52.17 | 52.24 | 39.69 | 41.83 | 41.83 | 52.17 | 52.30 |
| ISONATE^{™} 50 O,P (MDI), g | 0 | 0 | 56.95 | 0 | 0 | 0 | 0 | 56.95 | 56.95 | 0 | 0 |
| NS540 (polymeric MDI), g | 46.61 | 59.09 | 0 | 46.61 | 46.61 | 46.67 | 59.09 | 0 | 0 | 46.61 | 46.72 |
| Ph₃Sb, g | 0.52 | 0.52 | 0.52 | 0.52 | 0.52 | 0.47 | 0 | 0 | 0 | 0.52 | 0.42 |
| I₂, g | 0.70 | 0.70 | 0.70 | 0.70 | 0.70 | 0.63 | 0 | 0 | 0 | 0.70 | 0.56 |
| DBU, g | 0 | 0 | 0 | 0 | 0 | 0 | 0 | 1.22 | 0 | 0 | 0 |
| BMDA, g | 0 | 0 | 0 | 0 | 0 | 0 | 0 | 0 | 1.22 | 0 | 0 |
| 2E-4MI, g | 0 | 0 | 0 | 0 | 0 | 0 | 1.22 | 0 | 0 | 0 | 0 |
| Total | 100 | 100 | 100 | 100 | 100 | 100.01 | 100 | 100 | 100 | 100 | 100 |
| | | | | | | | | | | | |

| Cure Temperatures | | | | | | | | | | | |
|---|---|---|---|---|---|---|---|---|---|---|---|
| Initial, °C | 120 | 120 | 120 | 140 | 160 | 120 | 120 | 120 | 120 | 80 | 120 |
| Final, °C | 200 | 200 | 200 | 200 | 200 | 200 | 200 | 200 | 200 | 200 | 200 |
| NCO/Epoxy | 1.2 | 2 | 2 | -- | -- | -- | 2 | 1.5 | 2 | -- | -- |
| | | | | | | | | | | | |

| Properties of Resin | | | | | | | | | | | |
|---|---|---|---|---|---|---|---|---|---|---|---|
| Tg, °C | 195 | 211 | 140 | 200 | 200 | 190 | 210 | 197 | 210 | 179 | 188 |
| Oxazolidone/Isocyanurate | 1.10 | 0.86 | 1.75 | 1.34 | 1.50 | 0.85 | 0.16 | 0.35 | 0.05 | 1.10 | 0.95 |
| | | | | | | | | | | | |

| Properties of Cured Product | | | | | | | | | | | |
|---|---|---|---|---|---|---|---|---|---|---|---|
| Tensile strength, MPa | 86 | -- | -- | -- | -- | -- | 44 | 43 | 54 | -- | -- |
| Tensile strain, % | 3.3 | -- | -- | -- | -- | -- | 1.2 | 1.3 | 1.3 | -- | -- |
| Impact strength, KJ/m² | 42 | -- | -- | -- | -- | -- | 7.3 | 25 | 21 | -- | -- |
| Flex strength, MPa | 164 | -- | -- | -- | -- | -- | 106 | 148 | 115 | -- | -- |

The results described in Table II show that, when the formulations of Inv. Ex. 1-3 are compared to the three control samples (Comp. Ex. A-C), Inv. Ex. 1-3 demonstrate a higher oxazolidone selectivity, represented by the high ratio of oxazolidone/isocyanurate content. The results in Table II also show that catalyst selectivity has a significant impact on an in-situ cure process. In addition, the difference in the Tg for Inv. Ex. 2 and Inv. Ex. 3 demonstrates the impact of isocyanate functionality on Tg. And, the difference in Tg and oxazolidone functionality for Inv. Ex. 1 and Inv. Ex. 2 demonstrates the impact of the NCO/epoxy ratio on the Tg and oxazolidone functionality of the formulations.

For the sample formulations described in Table II above having a high oxazolidone/isocyanurate ratio, the mechanical properties including tensile strength, impact strength and flex strength, are all better than the sample formulations having a low oxazolidone/isocyanurate ratio. It is theorized the better mechanical properties of the present invention formulation is based on the impact of oxazolidone. This data described in Table II generally shows that a higher oxazolidone content (e.g., from 0.05 to 1.1) is desired to obtain a resin product with excellent mechanical properties.

In general, known oxazolidone-containing solutions include either a pre-polymer solution or a foaming process, which cannot generate a clear casting with neat epoxy resin and diisocyanate or pMDI. Several of the unique steps in the method of the present invention include (1) in situ catalyst formation in epoxy resin, (2) catalyst dosage, and (3) cure temperature. The process or operation range of the present invention can enable the in-situ oxazolidone formation simultaneous with the curation process, providing excellent mechanical properties for the resin products produced by the compositions of the present invention compared to resin products produced using oxazolidone prepolymers (e.g. VORAFORCE 200 series products available from The Dow Chemical Company). Due to the high viscosity of an oxazolidone-containing polymer, the desired epoxy/NCO mole ratio should be far from 1 to avoid a high degree of polymerization; and therefore, a high viscosity which naturally limits the oxazolidone content of the polymer. Another benefit of the in situ cure process of the present invention is that the raw materials used to form the solventless, in situ, curable reaction composition of the present invention do not contain oxazolidone; and thus, the viscosity of the original composition of the present invention is lower than prior art oxazolidone prepolymers. Therefore, the low viscosity composition of the present invention can be favorably used in many applications such as coating applications or composite applications.

The data in the above Table II demonstrates the impact of cure temperature of a final product. The data shows that there is a positive impact of temperature on oxazolidone selectivity when the temperature is above 120 °C. However, under 80 °C, even the selectivity is not changed from 120 °C, as the Tg significantly decreases. These results indicate the initial cure temperature desired is above 80 °C and more preferable above 120 °C to obtain a resin with a high Tg (e.g., > 190 °C).

The data in the above Table II illustrates that catalyst level is another important parameter to obtain a proper composition. When the results of testing the formulations of Inv. Ex-1, Inv. Ex. 6, and Comp. Ex. E, are compared, the data in Table II shows that the catalyst loading for Ph₃SbI₄ beneficially can be above 1.1 wt % to maintain a Tg above 190 °C.

### Example 7 and Comparative Examples F-L

The compositions for testing described in Table III were prepared according to the general procedure described above; and the results of testing the formulations prepared according to the above procedure are also found in Table III.

**Table III - Compositions and Test Results**

| | Inv. Ex. 7 | Comp. Ex. F | Comp. Ex. G | Comp. Ex. H | Comp. Ex. I | Comp. Ex. J (Control) | Comp. Ex. K (Control) | Comp. Ex. L (Control) |
|---|---|---|---|---|---|---|---|---|
| Component | | | | | | | | |
| Epoxy Resin (DER 383), g | 51.58 | 51.56 | 51.58 | 51.56 | 51.58 | 51.60 | 51.17 | 51.17 |
| ISONATE^{™} 50 O,P (MDI), g | 4.48 | 4.48 | 4.48 | 4.48 | 4.48 | 4.49 | 4.45 | 4.45 |
| NS540 (polymeric MDI), g | 42.89 | 42.87 | 42.89 | 42.87 | 42.89 | 42.91 | 42.55 | 42.55 |
| Ph₃Sb, g | 0.50 | 0.50 | 0.50 | 0.50 | 0.50 | 0.50 | 0.50 | 0.50 |
| I₂, g | 0.50 | 0.50 | 0.50 | 0.50 | 0.50 | 0.50 | 0.50 | 0.50 |
| DBU, g | 0.04 | 0.08 | 0.04 | -- | -- | -- | 0.83 | -- |
| 2E-4MI, g | 0 | -- | -- | 0.08 | 0.04 | -- | -- | 0.83 |
| Total | 99.99 | 99.99 | 99.99 | 99.99 | 99.99 | 100 | 100 | 100 |
| | | | | | | | | |

| Order of Catalyst Addition | | | | | | | | |
|---|---|---|---|---|---|---|---|---|
| 1st | Ph₃Sb | Ph₃Sb | Ph₃Sb | Ph₃Sb | Ph₃Sb | Ph₃Sb | Ph₃Sb | Ph₃Sb |
| 2nd | DBU | -- | I₂ | -- | -- | I₂ | -- | -- |
| 3rd | I₂ | -- | DBU | -- | -- | -- | -- | -- |
| | | | | | | | | |

| Cure Temperatures | | | | | | | | |
|---|---|---|---|---|---|---|---|---|
| Initial cure temperature, °C | 120 | 120 | 120 | 120 | 120 | 120 | 120 | 120 |
| Post cure temperature, °C | 200 | 200 | 200 | 200 | 200 | 200 | 200 | 200 |
| | | | | | | | | |

| Properties of Resin | | | | | | | | |
|---|---|---|---|---|---|---|---|---|
| Gel time at 120 °C, s | 290 | -- | 300 | -- | 180 | 590 | -- | -- |
| Viscosity after aging for 2 hours at 40 °C, cp | 1,300 | -- | 1,500 | -- | 3,500 | 1,100 | -- | -- |
| Viscosity after aging for 2 hours at 60 °C, cp | 20,000 | -- | >1,000,000 | -- | gel | 38,000 | -- | -- |
| Tg, °C | 200 | 174 | 199 | 185 | 203 | 194 | 197 | 210 |
| Oxazolidone/Isocyanurate ratio | 1.0 | 0.78 | 0.98 | 0.71 | 0.88 | 1.2 | 0.35 | 0.16 |

The data described in Table III shows that the example formulations using a primary catalyst (e.g., Ph₃Sb and I₂) in combination with a secondary catalyst (e.g., DBU or EMI) at a low loading (e.g., lower than 0.04 wt %), the Tg for the resulting resin product is higher than the example formulations using only the primary catalyst of Ph₃Sb and I₂. At the same time, the oxazolidone selectivity (Oxazolidone/Isocyanurate ratio), for example formulations using the primary and secondary catalyst, is much higher than for example formulations using a secondary catalyst only. Therefore, use of a low concentration of secondary catalyst provides a resin product having the benefits of a high Tg and concurrently a high oxazolidone content.

The data described in Table III also shows that a formulation including a secondary catalyst exhibits a good performance in reaction rate. As shown in Table III, the gel time results for Comp. Ex. J, which uses a catalyst combination of Ph₃Sb and I₂ catalyst, is higher than Inv. Ex. 7. The gel time on curing temperature, e.g. 120 °C, as well as in lower temperatures such as 40 °C or 60 °C, was significantly reduced (e.g., 50 % to 70 % reduction), after introducing a secondary catalyst into a formulation. This reduction in gel time indicates an increase in reactivity across all of the above conditions.

The impact of the sequence of catalyst loading in an example formulation on the properties of the example formulations can be seen from the results described in Table III. The formulation of Inv. Ex. 7 is the same as the formulation of Comp. Ex. G. However, the loading sequence of the catalysts used in Inv. Ex. 7 and Comp. Ex. G is different. The Tg, oxazolidone content, and gel time at cure temperature of formulations of Inv. Ex. 7 and Comp. Ex. G are almost identical. However, at a lower temperature, such as 40 °C and 60 °C, the formulation of Inv. Ex. 7 demonstrates excellent stability compared to the stability of the formulations of Comp. Ex. G and Comp. Ex. J. Therefore, for applications requiring a longer opening time at room temperature (e.g., 25 °C), the formulation of Inv. Ex. 7 demonstrates a high Tg, a high oxazolidone content, and a fast cure at high temperatures (e.g., 120 °C) and excellent stability at low temperatures (e.g., 40 °C).

## Claims

1. A solventless, in situ, curable reaction composition having an oxazolidone and isocyanurate structure comprising the reaction product of: (a) at least one polyepoxide compound; and (b) at least one polyisocyanate compound in the presence of (c) a catalyst system; wherein the catalyst system comprises at least one organoantimony catalyst, at least one nitrogen-containing catalyst, and at least one iodide catalyst added in a sequence in the order of first the organoantimony catalyst, then the nitrogen-containing catalyst, and last the iodide catalyst; wherein the organoantimony catalyst is triphenyl antimony and wherein the iodide catalyst is iodine; wherein the ratio of the at least one polyepoxide compound to the at least one polyisocyanate compound is from 1 to 1.5; and wherein the composition has an oxazolidone/isocyanurate ratio of greater than 0.8.

2. The composition of claim 1, wherein the nitrogen-containing catalyst is 1,8-diazabicyclo[5.4.0]undec-7-ene, 2-ethyl-4-methylimidazole, and mixtures thereof.

3. The composition of claim 1, wherein the oxazolidone/isocyanurate ratio of the polyoxazolidone material is from greater than 0.8 to 5.

4. The composition of claim 1, wherein the polyepoxide compound is bisphenol-A epoxy resin; wherein the polyisocyanate compound is diphenylmethanediisocyanate, polymeric diphenylmethanediisocyanate, or diphenylmethanediisocyanate-prepolymer.

5. The composition of claim 1, wherein the nitrogen-containing catalyst comprises 1,8-diazabicyclo[5.4.0]undec-7-ene and the mass ratio between the organoantimony to the iodide is from 0.75 to 1.5.

6. The composition of claim 1, wherein the concentration of the polyepoxide compound is from 30 weight percent to 70 weight percent; wherein the concentration of the polyisocyanate compound is from 30 weight percent to 70 weight percent; and the concentration of the catalyst system is from 1 weight percent to 3 weight percent.

7. The composition of claim 1, wherein said polyepoxide and polyisocyanate each have an average functionality of from 2 to 3.

8. A process for producing a curable resin composition comprising admixing: a) at least one polyepoxide compound; and (b) at least one polyisocyanate compound in the presence of (c) a catalyst system; wherein the catalyst system comprises at least one organoantimony catalyst, at least one nitrogen-containing catalyst, and at least one iodide catalyst added in a sequence in the order of first the organoantimony catalyst, then the nitrogen-containing catalyst, and last the iodide catalyst; wherein the organoantimony catalyst is triphenyl antimony and wherein the iodide catalyst is iodine; wherein the ratio of the at least one polyepoxide compound to the at least one polyisocyanate compound is from 1 to 1.5; and wherein the composition has an oxazolidone/isocyanurate ratio of greater than 0.8.

9. The process of claim 8, wherein the mixing temperature is from about 25 °C to 60 °C.

10. A cured thermoset resin product comprising a crosslinked cured product of the reaction composition of: (a) at least one polyepoxide compound; and (b) at least one polyisocyanate compound in the presence of (c) a catalyst system; wherein the catalyst system comprises at least one organoantimony catalyst, at least one nitrogen-containing catalyst, and at least one iodide catalyst added in a sequence in the order of first the organoantimony catalyst, then the nitrogen-containing catalyst, and last the iodide catalyst; wherein the organoantimony catalyst is triphenyl antimony and wherein the iodide catalyst is iodine; wherein the ratio of the at least one polyepoxide compound to the at least one polyisocyanate compound is from 1 to 1.5; and wherein the composition has an oxazolidone/isocyanurate ratio of greater than 0.8.

11. A process for producing a cured thermoset resin product comprising the steps of:
(I) admixing: (a) at least one polyepoxide compound; and (b) at least one polyisocyanate compound in the presence of (c) a catalyst system; wherein the catalyst system comprises at least one organoantimony catalyst, at least one nitrogen-containing catalyst, and at least one iodide catalyst added in a sequence in the order of first the organoantimony catalyst, then the nitrogen-containing catalyst, and last the iodide catalyst; wherein the organoantimony catalyst is triphenyl antimony and wherein the iodide catalyst is iodine; wherein the ratio of the at least one polyepoxide compound to the at least one polyisocyanate compound is from 1 to 1.5; and wherein the composition has an oxazolidone/isocyanurate ratio of greater than 0.8; and
(II) heating the composition of step (I) at a curing temperature for a period of time to form a cured thermoset product.

12. The process of claim 11, wherein the curing temperature is from 80 °C to 220 °C.

13. The process of claim 11, wherein the period of time for curing is from 30 seconds to 1 hour.

## Patentansprüche

1. Lösungsmittelfreie, in situ aushärtbare Reaktionszusammensetzung, die eine Oxazolidon- und Isocyanuratstruktur aufweist, umfassend das Reaktionsprodukt von: (a) mindestens einer Polyepoxidverbindung; und (b) mindestens einer Polyisocyanatverbindung in der Gegenwart von (c) einem Katalysatorsystem; wobei das Katalysatorsystem mindestens einen Organoantimonkatalysator, mindestens einen stickstoffhaltigen Katalysator und mindestens einen lodidkatalysator umfasst, die in einer Sequenz in der Reihenfolge von zuerst der Organoantimonkatalysator, dann der stickstoffhaltige Katalysator und zuletzt der lodidkatalysator zugegeben werden; wobei der Organoantimonkatalysator Triphenylantimon ist und wobei der lodidkatalysator lod ist; wobei das Verhältnis der mindestens einen Polyepoxidverbindung zu der mindestens einen Polyisocyanatverbindung von 1 bis 1,5 beträgt; und wobei die Zusammensetzung ein Oxazolidon/Isocyanurat-Verhältnis von mehr als 0,8 aufweist.

2. Zusammensetzung nach Anspruch 1, wobei der stickstoffhaltige Katalysator 1,8-Diazabicyclo[5.4.0]undec-7-en, 2-Ethyl-4-methylimidazol und Mischungen davon ist.

3. Zusammensetzung nach Anspruch 1, wobei das Oxazolidon/Isocyanurat-Verhältnis des Polyoxazolidonmaterials von mehr als 0,8 bis 5 beträgt.

4. Zusammensetzung nach Anspruch 1, wobei die Polyepoxidverbindung Bisphenol-A-Epoxidharz ist; wobei die Polyisocyanatverbindung Diphenylmethandiisocyanat, polymeres Diphenylmethandiisocyanat oder Diphenylmethandiisocyanatpräpolymer ist.

5. Zusammensetzung nach Anspruch 1, wobei der stickstoffhaltige Katalysator 1,8-Diazabicyclo[5.4.0]undec-7-en umfasst und das Massenverhältnis zwischen dem Organoantimon zu dem lodid von 0,75 bis 1,5 beträgt.

6. Zusammensetzung nach Anspruch 1, wobei die Konzentration der Polyepoxidverbindung von 30 Gew.-% bis 70 Gew.-% beträgt; wobei die Konzentration der Polyisocyanatverbindung von 30 Gew.-% bis 70 Gew.-% beträgt; und die Konzentration des Katalysatorsystems von 1 Gew.-% bis 3 Gew.-% beträgt.

7. Zusammensetzung nach Anspruch 1, wobei das Polyepoxid und das Polyisocyanat jeweils eine durchschnittliche Funktionalität von 2 bis 3 aufweisen.

8. Verfahren zum Produzieren einer aushärtbaren Harzzusammensetzung, umfassend ein Beimengen von: a) mindestens einer Polyepoxidverbindung; und (b) mindestens einer Polyisocyanatverbindung in der Gegenwart von (c) einem Katalysatorsystem; wobei das Katalysatorsystem mindestens einen Organoantimonkatalysator, mindestens einen stickstoffhaltigen Katalysator und mindestens einen lodidkatalysator umfasst, die in einer Sequenz in der Reihenfolge von zuerst der Organoantimonkatalysator, dann der stickstoffhaltige Katalysator und zuletzt der lodidkatalysator zugegeben werden; wobei der Organoantimonkatalysator Triphenylantimon ist und wobei der lodidkatalysator lod ist; wobei das Verhältnis der mindestens einen Polyepoxidverbindung zu der mindestens einen Polyisocyanatverbindung von 1 bis 1,5 beträgt; und wobei die Zusammensetzung ein Oxazolidon/Isocyanurat-Verhältnis von mehr als 0,8 aufweist.

9. Verfahren nach Anspruch 8, wobei die Mischtemperatur von etwa 25 °C bis 60 °C beträgt.

10. Ausgehärtetes Duroplastharzprodukt, umfassend ein vernetztes ausgehärtetes Produkt der Reaktionszusammensetzung von: (a) mindestens einer Polyepoxidverbindung; und (b) mindestens einer Polyisocyanatverbindung in der Gegenwart von (c) einem Katalysatorsystem; wobei das Katalysatorsystem mindestens einen Organoantimonkatalysator, mindestens einen stickstoffhaltigen Katalysator und mindestens einen lodidkatalysator umfasst, die in einer Sequenz in der Reihenfolge von zuerst der Organoantimonkatalysator, dann der stickstoffhaltige Katalysator und zuletzt der lodidkatalysator zugegeben werden; wobei der Organoantimonkatalysator Triphenylantimon ist und wobei der lodidkatalysator lod ist; wobei das Verhältnis der mindestens einen Polyepoxidverbindung zu der mindestens einen Polyisocyanatverbindung von 1 bis 1,5 beträgt; und wobei die Zusammensetzung ein Oxazolidon/Isocyanurat-Verhältnis von mehr als 0,8 aufweist.

11. Verfahren zum Produzieren eines ausgehärteten Duroplastprodukts, umfassend folgenden Schritte:
(I) Beimengen von: (a) mindestens einer Polyepoxidverbindung; und (b) mindestens einer Polyisocyanatverbindung in der Gegenwart von (c) einem Katalysatorsystem; wobei das Katalysatorsystem mindestens einen Organoantimonkatalysator, mindestens einen stickstoffhaltigen Katalysator und mindestens einen lodidkatalysator umfasst, die in einer Sequenz in der Reihenfolge von zuerst der Organoantimonkatalysator, dann der stickstoffhaltige Katalysator und zuletzt der lodidkatalysator zugegeben werden; wobei der Organoantimonkatalysator Triphenylantimon ist und wobei der lodidkatalysator lod ist; wobei das Verhältnis der mindestens einen Polyepoxidverbindung zu der mindestens einen Polyisocyanatverbindung von 1 bis 1,5 beträgt; und wobei die Zusammensetzung ein Oxazolidon/Isocyanurat-Verhältnis von mehr als 0,8 aufweist; und
(II) Erhitzen der Zusammensetzung aus Schritt (I) bei einer Aushärtungstemperatur für eine Zeitspanne, um ein ausgehärtetes Duroplastprodukt auszubilden.

12. Verfahren nach Anspruch 11, wobei die Aushärtungstemperatur von 80 °C bis 220 °C beträgt.

13. Verfahren nach Anspruch 11, wobei die Zeitspanne zum Aushärten von 30 Sekunden bis 1 Stunde beträgt.

## Revendications

1. Composition réactionnelle durcissable in situ, sans solvant ayant une structure d'oxazolidone et d'isocyanurate comprenant le produit de réaction de : (a) au moins un composé polyépoxyde ; et (b) au moins un composé polyisocyanate en présence de (c) un système de catalyseur ; dans laquelle le système de catalyseur comprend au moins un catalyseur organoantimoine, au moins un catalyseur contenant de l'azote, et au moins un catalyseur iodure ajoutés dans une séquence dans l'ordre du catalyseur organoantimoine en premier, puis le catalyseur contenant de l'azote, et enfin le catalyseur iodure ; dans laquelle le catalyseur organoantimoine est du triphényl-antimoine et dans laquelle le catalyseur iodure est de l'iode ; dans laquelle le rapport de l'au moins un composé polyépoxyde à l'au moins un composé polyisocyanate va de 1 à 1,5 ; et dans laquelle la composition a un rapport oxazolidone/isocyanurate supérieur à 0,8.

2. Composition selon la revendication 1, dans laquelle le catalyseur contenant de l'azote est 1,8-diazabicyclo[5.4.0]undéc-7-ène, 2-éthyl-4-méthylimidazole, et mélanges de ceux-ci.

3. Composition selon la revendication 1, dans laquelle le rapport oxazolidone/isocyanurate du matériau polyoxazolidone va de plus de 0,8 à 5.

4. Composition selon la revendication 1, dans laquelle le composé polyépoxyde est une résine époxy de bisphénol-A ; dans laquelle le composé polyisocyanate est diphénylméthanediisocyanate, diphénylméthanediisocyanate polymère, ou prépolymère de diphénylméthanediisocyanate.

5. Composition selon la revendication 1, dans laquelle le catalyseur contenant de l'azote comprend 1,8-diazabicyclo[5.4.0]undéc-7-ène et le rapport massique entre l'organoantimoine et l'iodure va de 0,75 à 1,5.

6. Composition selon la revendication 1, dans laquelle la concentration du composé polyépoxyde va de 30 pour cent en poids à 70 pour cent en poids ; dans laquelle la concentration du composé polyisocyanate va de 30 pour cent en poids à 70 pour cent en poids ; et la concentration du système de catalyseur va de 1 pour cent en poids à 3 pour cent en poids.

7. Composition selon la revendication 1, dans laquelle lesdits polyépoxyde et polyisocyanate ont chacun une fonctionnalité moyenne allant de 2 à 3.

8. Procédé permettant de produire une composition de résine durcissable comprenant le fait e mélanger : a) au moins un composé polyépoxyde ; et (b) au moins un composé polyisocyanate en présence de (c) un système de catalyseur ; dans lequel le système de catalyseur comprend au moins un catalyseur organoantimoine, au moins un catalyseur contenant de l'azote, et au moins un catalyseur iodure ajoutés dans une séquence dans l'ordre du catalyseur organoantimoine en premier, puis le catalyseur contenant de l'azote, et enfin le catalyseur iodure ; dans lequel le catalyseur organoantimoine est du triphényl-antimoine et dans laquelle le catalyseur iodure est de l'iode ; dans lequel le rapport de l'au moins un composé polyépoxyde à l'au moins un composé polyisocyanate va de 1 à 1,5 ; et dans lequel la composition a un rapport oxazolidone/isocyanurate supérieur à 0,8.

9. Procédé selon la revendication 8, dans lequel la température de mélange va d'environ 25 °C à 60 °C.

10. Produit de résine thermodurcissable durci comprenant un produit durci réticulé de la composition réactionnelle de : (a) au moins un composé polyépoxyde ; et (b) au moins un composé polyisocyanate en présence de (c) un système de catalyseur ; dans lequel le système de catalyseur comprend au moins un catalyseur organoantimoine, au moins un catalyseur contenant de l'azote, et au moins un catalyseur iodure ajoutés dans une séquence dans l'ordre du catalyseur organoantimoine en premier, puis le catalyseur contenant de l'azote, et enfin le catalyseur iodure ; dans lequel le catalyseur organoantimoine est du triphényl-antimoine et dans lequel le catalyseur iodure est de l'iode ; dans lequel le rapport de l'au moins un composé polyépoxyde à l'au moins un composé polyisocyanate va de 1 à 1,5 ; et dans lequel la composition a un rapport oxazolidone/isocyanurate supérieur à 0,8.

11. Procédé permettant de produire un produit de résine thermodurcissable durci comprenant les étapes consistant à :
(I) mélanger : (a) au moins un composé polyépoxyde ; et (b) au moins un composé polyisocyanate en présence de (c) un système de catalyseur ; dans lequel le système de catalyseur comprend au moins un catalyseur organoantimoine, au moins un catalyseur contenant de l'azote, et au moins un catalyseur iodure ajoutés dans une séquence dans l'ordre du catalyseur organoantimoine en premier, puis le catalyseur contenant de l'azote, et enfin le catalyseur iodure ; dans lequel le catalyseur organoantimoine est du triphényl-antimoine et dans lequel le catalyseur iodure est de l'iode ; dans lequel le rapport de l'au moins un composé polyépoxyde à l'au moins un composé polyisocyanate va de 1 à 1,5 ; et dans lequel la composition a un rapport oxazolidone/isocyanurate supérieur à 0,8 ; et
(II) chauffer la composition de l'étape (I) à une température de durcissement pendant un laps de temps pour former un produit thermodurcissable durci.

12. Procédé selon la revendication 11, dans lequel la température de durcissement va de 80 °C à 220 °C.

13. Procédé selon la revendication 11, dans lequel le laps de temps pour le durcissement va de 30 secondes à 1 heure.
